# EUROPEAN PATENT SPECIFICATION

(11) **EP 2 381 613 B1**
(45) Date of publication and mention of the grant of the patent: **26.07.2017**
(21) Application number: 10160483.3
(22) Date of filing: 20.04.2010
(51) Int. Cl.: H04L 9/00, H04L 1/00, H04W 12/02, H04W 12/12

(54) **Enhancing security of communication systems**
Verbesserung der Sicherheit von Kommunikationssystemen
Amélioration de la sécurité de systèmes de communication

(43) Date of publication of application: 26.10.2011
(73) Proprietor: Swisscom AG, 3050 Bern (CH)
(72) Inventor: Luiset, Sylvain, 1700 Fribourg (CH); Rouiller, Steve, 3005 Bern (CH)
(74) Representative: BOVARD AG

(56) References cited:
- EP-A2- 0 966 126
- WO-A2-2009/090432
- US-A1- 2006 120 521
- "Digital cellular telecommunications system (Phase 2+); Channel coding (3GPP TS 05.03 version 8.9.0 Release 1999); ETSI TS 100 909" ETSI STANDARDS, LIS, SOPHIA ANTIPOLIS CEDEX, FRANCE, vol. 3-G1;SMG2, no. V8.9.0, 1 January 2005 (2005-01-01), XP014027229 ISSN: 0000-0001

## Description

### TECHNICAL FIELD

The present invention relates to a new method of transmitting signalling information in a communication network. The invention likewise relates to a corresponding computer program product, to communication network elements and to a communication system.

### BACKGROUND OF THE INVENTION

Security is an important issue both in wireless and wired communication networks. Data encryption, for instance, is widely used in radio communication networks to improve the security of its users. In spite of data encryption, certain attacks remain possible. It is widely known that at the beginning of a communication session setup, certain messages are transmitted between a transmitting device and a receiving device. A known-plaintext attack is an attack type where the attacker has samples of both the plaintext and its encrypted version (ciphertext) and is able to make use of them to reveal further secret information, such as secret keys and code books.

Nowadays some cryptographic protocols are considered as weak due to the possibility of launching a known-plaintext attack against them. These encryption algorithms can be cracked with the known-plaintext attacks because some messages, even if encrypted, that are exchanged between communication devices are known to attackers. Thus, the attackers are able to retrieve the initial state of the encrypted cipher key and the session key as well.

For instance, in global system for mobile communications (GSM) A5/1 is an encryption algorithm used to provide over-the-air communication privacy. Ciphering in this algorithm is achieved by performing an "exclusive or" operation between a pseudo-random bit sequence and 114 useful bits of a normal burst (i.e. all information bits except 2 stealing flags). The pseudo-random sequence is derived from the burst number and a key session established previously through signalling means. The A5/1 algorithm was initially kept secret, but became public knowledge through reverse engineering and leaks. A number of weaknesses in the cipher have been identified. A5/1 algorithms can also be cracked with the known-plaintext attacks.

WO 2009/090432 relates to a method of enhancing security of communications between a mobile terminal and a cellular network node (base station). A communication session transmitted on a first traffic channel '0' is encrypted using a key 'KA'. The security is enhanced by causing the communication channel to change to a second communication channel '7' after a predetermined time, preferably very quickly after establishing the key. In one embodiment the communication channel then changes to a third communication channel '25' after a predetermined time. In another embodiment the communication session is encrypted using a second key 'KB' after causing the communication channel to change to the second communication channel '7'.

It is the aim of the present invention to provide a solution for improving security in communication networks.

### SUMMARY OF THE INVENTION

According to a first aspect of the invention, a method is provided for transmitting signalling information between a first communication network element and a second communication network element in a communication network, the method comprising the following steps performed by the first communication network element:
- obtaining at least two uncoded signalling messages;
- encoding the at least two uncoded signalling messages to obtain at least two encoded signalling messages;
- dividing the encoded signalling messages into bursts by interleaving data from more than one encoded signalling message;
- ciphering the bursts; and
- transmitting the bursts to the second communication network element,
the method being characterised in that at least some bursts contain data from a predictable signalling message and an unpredictable signalling message.

The proposed method offers a cheap and reliable way of improving security in communication networks, such as GSM networks. In these networks, the proposed solution improves the security of the A5/1 algorithms. More specifically, the present invention aims to prevent known-plaintext attacks by interleaving predictable information with unpredictable information. One major advantage is also that the solution is immediately applicable and does not require changes in the network architecture.

According to a second aspect of the invention, a computer program product is provided for implementing the steps of a method according to the first aspect of the present invention when loaded and run on computer means of the first communication network element.

According to a third aspect of the invention, a communication network element is provided for transmitting signalling information to a second communication network element in a communication network, the communication network element comprising:
- means for obtaining at least two uncoded signalling messages;
- means for encoding the at least two uncoded signalling messages to obtain at least two encoded signalling messages;
- means for dividing the encoded signalling messages into bursts by interleaving data from more than one encoded signalling message;
- means for ciphering the bursts; and
- means for transmitting the bursts from the communication network element to the other communication network element,
the communication element being characterised in that at least some bursts contain data from a predictable signalling message and an unpredictable signalling message.

Other aspects of the invention are recited in the dependent claims attached hereto.

### BRIEF DESCRIPTION OF THE DRAWINGS

Other features and advantages of the invention will become apparent from the following description of a non-limiting exemplary embodiment, with reference to the appended drawings, in which:
- Figure 1 is a simplified network block diagram of a GSM communication network where the teachings of the present invention can be applied in accordance with the described embodiment of the present invention;
- Figure 2 illustrates an example of an interleaving process in accordance with the described embodiment of the present invention; and
- Figure 3 is a flow chart illustrating the signalling information transmission method in accordance with the described embodiment of the present invention.

### DETAILED DESCRIPTION OF AN EMBODIMENT OF THE INVENTION

An embodiment of the present invention will be described in the following in more detail with reference to the attached figures. This embodiment will be described in the context of a GSM network, but it is to be noted that the teachings of the present invention are not limited to GSM networks.

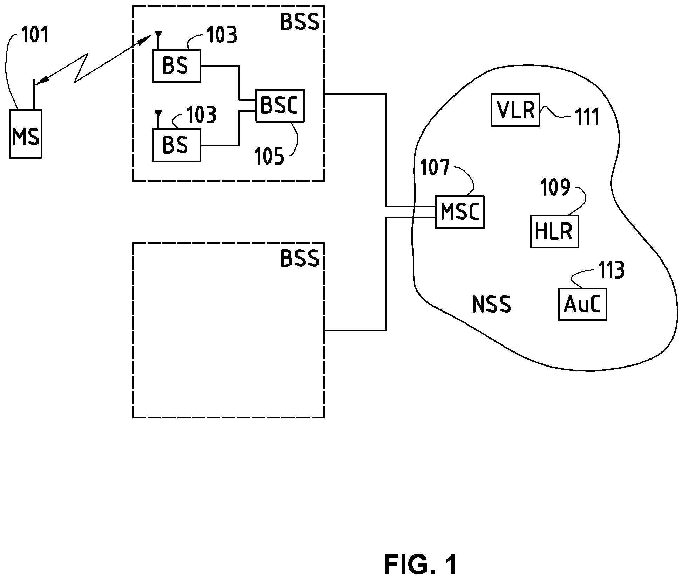

Figure 1 illustrates a simplified block diagram of a GSM network architecture. In this architecture a mobile station (MS) 101 is arranged to communicate with a base station system (BSS) through a radio interface. The BSS comprises base stations (BSs) 103 that contain a transmitter, a receiver and signalling equipment for communicating directly with MSs 101 over the radio interface. The BSs 103 also comprise a transcoder/rate adapter unit (TRAU) that carries out GSM-specific speech encoding/decoding and rate adaption in data transmission.

The BSS further comprises at least one base station controller (BSC) 105 that is arranged to communicate with the BSs 103 and also with a mobile switching centre (MSC) 107 using a so-called A interface. The MSC 107 is part of a network and switching subsystem (NSS). The BSC 105 is responsible for the switching functions in the BSS. The BSC 105 also supports radio allocation/release and handover management.

The NSS supports the switching functions, mobility management and subscriber management. The MSC 107 performs the basic switching function in the NSS. The current location of the MS 101 is usually maintained by a home location register (HLR) 109 and a visitor location register (VLR) 111. When the MS 101 moves from the home system to a visited system, its location is registered at the VLR 111 of the visited system. The VLR 111 then informs the MS's 101 HLR 109 of its current location. The authentication centre (AuC) 113 is used in the security management for the authentication of subscribers. The AuC 113 may be collocated with the HLR 109.

The frequency selected by a network operator is divided into time slots for individual phones to use. Eight time slots, or eight burst periods, are grouped into a TDMA frame of which duration is 4.615 ms. Thus, this configuration allows the use of eight full-rate or sixteen half-rate speech channels per radio frequency, the half rate channels using alternate frames in the same time slot.

A physical channel is specified by a specific time slot in a specific channel/carrier frequency. Logical channels on the other hand run over a physical channel, but not necessarily in all its time slots. Depending on the information carried by a time slot, two types of logical channels are defined: traffic channels (TCHs) and control channels (CCHs) which are further divided in GSM into common control channels, dedicated control channels and broadcast channels. As the present invention concerns the transmission of signalling information, the traffic channels are not treated here. Furthermore, only the control channels that help to understand the present invention are briefly discussed in the following.

In GSM, dedicated control channels are supported for dedicated use by a specific MS. The following dedicated control channels relate to the present invention:
- A standalone dedicated control channel (SDCCH) is used for signalling and for short messages.
- A slow associated control channel (SACCH) is associated with either a TCH or an SDCCH. The SACCH is used for non-urgent procedures, predominantly the transmission of power and time alignment control information over the downlink and measurement reports from the MS over the uplink. A TCH is allocated with a control channel SACCH to transport both user information and signalling data in parallel.
- A fast associated control channel (FACCH) is used for time critical signalling such as call establishing procedure, authentication of subscriber, or handover. The FACCH makes use of the TCH during a call. Thus, there is a loss of user data, because the FACCH "steals" the bandwidth of the TCH.

For all these three channels, the length of an original uncoded message is 184 bits. Each channel has its own coding and interleaving scheme, as described in 3GPP TS 05.03 V8.9.0 (2005-01), Section 2. However, the channel coding and interleaving is organised in such a way as to allow, as much as possible, a unified decoder structure.

Each channel uses the following sequence and order of operations:
- the information bits are coded with a systematic block code, building words of information + parity bits;
- these information + parity bits are encoded with a convolutional code, building the coded bits;
- reordering and interleaving the coded bits, and adding a stealing flag, gives the interleaved bits.

All these operations are made block by block, the size of which depends on the channel. However, most of the channels use a block of 456 coded bits which is interleaved and mapped onto bursts in a very similar way for all of them.

This block of 456 coded bits is the basic structure of the channel coding scheme. In the case of full rate speech TCH, this block carries the information of one speech frame. In case of control channels, it carries one message. In the case of half rate speech TCH, the information of one speech frame is carried in a block of 228 coded bits.

In this illustrated example, the signalling messages to be transmitted are radio resource (RR) control messages. The signalling information is understood to be distinct from data or speech information. The RR messages are used to establish a link, both radio and fixed, between the MS 101 and the MSC 107. The main functional components involved are the MS 101, and the BSS, as well as the MSC 107. A so-called RR layer is concerned with the management of an RR session, which is the time that a mobile is in dedicated mode, as well as the configuration of radio channels including the allocation of dedicated channels.

An RR session is initiated by the MS 101 through the access procedure, either for an outgoing call, or in response to a paging message. The details of the access and paging procedures, such as when a dedicated channel is assigned to the mobile, and the paging sub-channel structure, are handled in the RR layer. In addition, it also handles the management of radio features such as power control, discontinuous transmission and reception, and timing advance.

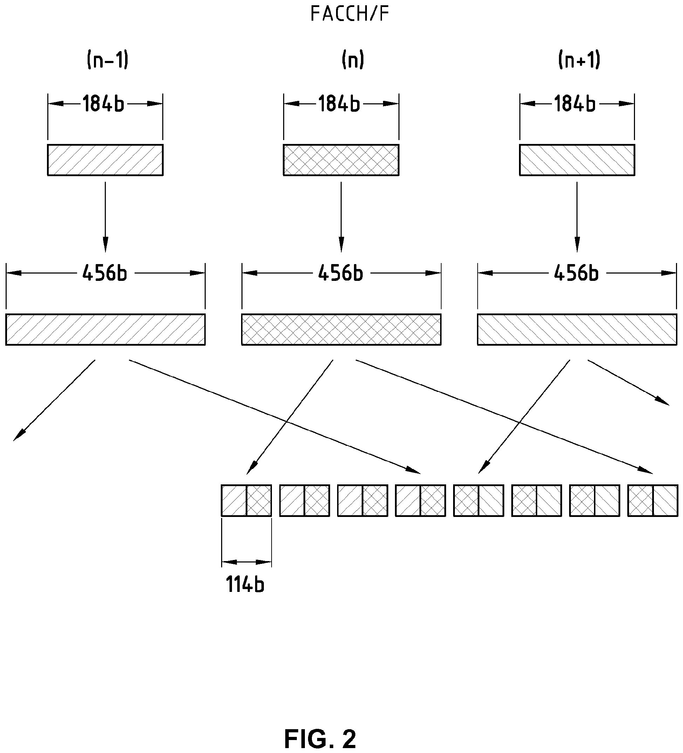

Traditionally certain RR messages are transmitted on SACCH or on SDCCH. Before transmission over a radio interface, block rectangular interleaving is performed, i.e. interleaving of the data of the same message. However, in accordance with the present invention, instead of sending the RR messages on SACCH or on SDCCH, they are transmitted on FACCH/F (where the last F stands for full rate) so that block diagonal interleaving (i.e. interleaving data of at least two different messages) is done before transmission over the radio interface. Furthermore, in accordance with the present invention, the interleaving involves mixing data from a known or predictable message and data from an unknown or unpredictable message. This is further illustrated in Figure 2.

For instance, data of message (n), which is a predictable message, illustrated in Figure 2 with cross hatching, are interleaved with data of messages (n-1) and (n+1) as shown in Figure 2. Message (n-1) illustrated in Figure 2 with rightward leaning hatching pattern and message (n+1) illustrated in Figure 2 with leftward leaning hatching pattern are both unpredictable messages. So in order for the receiving end to be able to reconstruct message (n), the receiving device needs to recover and decipher all the eight time slots that contain data from message (n). In other words, message (n) is interleaved over eight bursts, which equals the size of two messages. Each burst contains two data elements of 57 bits, each of these data elements comes from a different encoded signalling message. As explained above, the data from one specific encoded message is spread over eight consecutive bursts or time slots. The interleaving is done so that each of the first four bursts contains 57 bits from a previous encoded message (n-1) and 57 bits from the current encoded message (n) and each of the last four bursts contains 57 bits from the current message (n) and 57 bits from the next encoded message (n+1).

Thus, the actual interleaving process in this example follows the principles of the existing interleaving process defined for the FACCH/F (3GPP TS 05.03 V8.9.0 (2005-01), Subsection 4.2.4 referring to Subsection 3.1.3). This has the effect that the proposed solution has a minimal impact on the GSM stack. The receiving end can determine the used interleaving scheme once it detects on which channel (FACCH/F, SACCH or SDCCH) the message was received.

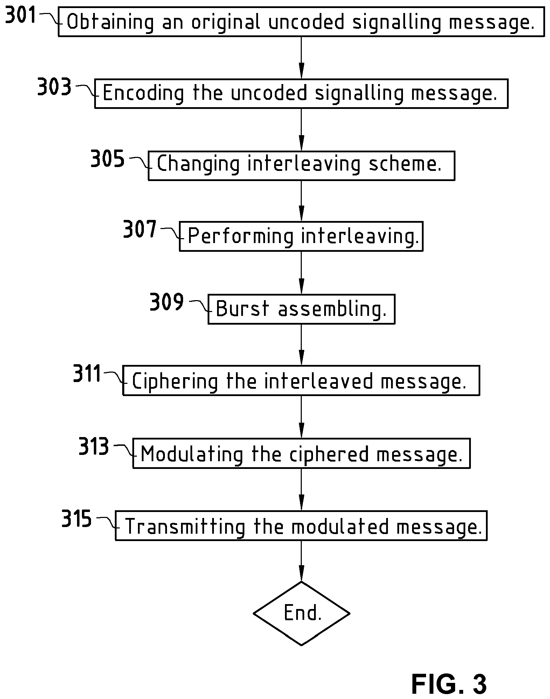

The flow chart of Figure 3 illustrates the method of transmitting signalling information on the FACCH/F as described above. The method steps described below can be performed either by the MS 101 or the BSS. First in step 301 an original uncoded signalling message is obtained. The length of this message is 184 bits. The content of this message is predictable to a person who observes this network. This message is e.g. a message used for initiating a voice communication session between two MSs 101. In step 303 the uncoded signalling message is encoded so that an encoded message is obtained. The encoding can be done in two separate steps: first applying a fire code and tail bits and then applying a convolutional code. The length of this encoded signalling message is 456 bits.

Then instead of performing interleaving based on interleaving policies applied to SACCH or SDCCH, i.e. instead of performing rectangular interleaving, in step 305 the default interleaving scheme is changed to another interleaving scheme, which in this example corresponds to the interleaving scheme of FACCH/F. Then in step 307 interleaving is performed based on policies applied to FACCH/F. In other words diagonal interleaving is done. And what is more, the interleaving is done so that data from predictable and non-predictable messages are interleaved as explained with reference to Figure 2. The encoded message can thus be said to be deviated to be transmitted on the FACCH/F instead of transmitting it on the SACCH or SDCCH.

In step 309 the interleaved bursts are assembled and in step 311 the assembled bursts are ciphered. Next the ciphered message is modulated in step 313 and in step 315 the signalling message is transmitted to the receiving end over the radio interface.

An embodiment of the invention was described above in the context of a GSM system. However, the teachings of the present invention are not limited to this system. The teachings of the present invention are applicable to all systems, where by mixing known and unknown messages the security level of the encrypted communications is increased as desired so that an outsider for the network, i.e. a network observer, cannot know, or no longer determine or recognise, the content of the transmitted messages. Thus, he can no longer determine certain security elements, such as the cipher key or session key. The teachings of the present invention are thus applicable, for instance, to the following wireless communication systems: universal mobile communication system (UMTS), wireless local area networks (WLANs) based on 802.11 standards, Bluetooth, near field communication (NFC) systems, or to the following wired communication systems: universal serial bus (USB), Ethernet or integrated services digital network (ISDN).

The invention likewise relates to a communication network element, such as the MS 101 or the BSC 105, that is able to implement the method described above. It is also possible that when implemented by the BSS, some of the method steps are performed by the BSC 105 and some of the method steps are performed by the BS 103.

The invention likewise relates to a computer program product comprising instructions for implementing the steps of the method described above, when loaded and run on computer means of the communication network element capable of implementing the method.

While the invention has been illustrated and described in detail in the drawings and foregoing description, such illustration and description are to be considered illustrative or exemplary and not restrictive, the invention being not limited to the disclosed embodiment. Other embodiments and variants are understood, and can be achieved by those skilled in the art when carrying out the claimed invention, based on a study of the drawings, the disclosure and the appended claims. In particular, when performing interleaving, it is possible to take one unpredictable message and mix this message with two predictable messages, instead of taking one predictable message and mixing this with two unpredictable messages as described with reference to Figure 2. Furthermore, the interleaving procedure can be different from the procedure described above. For instance, instead of mixing three messages, it is possible to mix only two messages, i.e. one predictable message and one unpredictable. Actually, any number of messages could be mixed as long at least one unpredictable and one predictable message are mixed. If the interleaving scheme differs from the standard scheme explained with reference to 2, the receiving end should then be informed about the chosen interleaving scheme.

In the claims, the word "comprising" does not exclude other elements or steps, and the indefinite article "a" or "an" does not exclude a plurality. A single processor or other unit may fulfil the functions of several items recited in the claims. The mere fact that different features are recited in mutually different dependent claims does not indicate that a combination of these features cannot be advantageously used. Any reference signs in the claims should not be construed as limiting the scope of the invention.

## Claims

1. A method of transmitting signalling information between a first communication network element (105) and a second communication network element (101) in a communication network, the method comprising the following steps performed by the first communication network element (105):
• obtaining (301) at least two uncoded signalling messages;
• encoding (303) the at least two uncoded signalling messages to obtain at least two encoded signalling messages;
• dividing (307) the encoded signalling messages into bursts by interleaving data from more than one encoded signalling message;
• ciphering the bursts; and
• transmitting (315) the ciphered bursts to the second communication network element (101),
the method being **characterised in that** at least some bursts contain data from a predictable signalling message and an unpredictable signalling message.

2. A method according to claim 1, wherein the content of the predictable signalling message can be determined or recognised by a network observer and the content of an unpredictable signalling message cannot be determined or recognised by a network observer.

3. A method according to any one of the preceding claims, wherein the signalling information is radio resource control information.

4. A method according to any one of the preceding claims, wherein the method further comprises changing (305) a default interleaving scheme to another interleaving scheme.

5. A method according to claim 4, wherein the default scheme corresponds to the interleaving scheme of a standalone dedicated control channel or a slow associated control channel and the other interleaving scheme corresponds to the interleaving scheme of a full rate fast associated control channel.

6. A method according to any one of the preceding claims, wherein the length of the uncoded message is 184 bits and the length of the encoded message is 456 bits.

7. A method according to any one of the preceding claims, wherein the interleaving is done so that the data from one specific encoded message is spread over eight consecutive bursts.

8. A method according to claim 7, wherein the interleaving is done so that each of the first four bursts contains 57 bits from a previous encoded message (n-1) and 57 bits from the current encoded message (n) and each of the last four bursts contains 57 bits from the current message (n) and 57 bits from the next encoded message (n+1).

9. A method according claim 8, wherein the interleaving is done so that the current message (n) is an unpredictable message and messages (n-1) and (n+1) are predictable messages or the current message (n) is a predictable message and messages (n-1) and (n+1) are unpredictable messages.

10. A method according to any one of the preceding claims, wherein when the first communication network element (105) is a base station controller (105) of a radio communication network, the second communication network element (101) is a mobile phone (101), and when the first communication network element (105) is a mobile phone (101) of a radio communication network, the second communication network element (101) is a base station controller (105) of a radio communication network.

11. A method according to any one of the preceding claims, wherein all bursts contain data from a predictable signalling message and an unpredictable signalling message.

12. A method according to any one of the preceding claims, wherein the communication network is arranged to operate based on the global system for mobile communications network standard.

13. A computer program product comprising instructions for implementing the steps of a method according to any one of the preceding claims, when loaded and run on computer means of the first network element (101; 105).

14. A communication network element (105) for transmitting signalling information to another communication network element (101) in a communication network, the communication network element comprising:
• means for obtaining at least two uncoded signalling messages;
• means for encoding the at least two uncoded signalling messages to obtain at least two encoded signalling messages;
• means for dividing the encoded signalling messages into bursts by interleaving data from more than one encoded signalling message;
• means for ciphering the bursts; and
• means for transmitting the ciphered bursts from the communication network element (105) to the other communication network element (101),
the communication element (105) being **characterised in that** at least some bursts contain data from a predictable signalling message and an unpredictable signalling message.

15. A communication network element according to claim 14, wherein when the communication network element (105) is a base station controller (105) of a radio communication network and the other communication network element (101) is a mobile phone (101), and when the communication network element (105) is a mobile phone (101) of a radio communication network, the other communication network element (101) is a base station controller (105) of a radio communication network.

## Patentansprüche

1. Ein Verfahren zum Übertragen von Signalisierungsinformation in einem Kommunikationsnetzwerk zwischen einem ersten Kommunikationsnetzwerkelement (105) und einem zweiten Kommunikationsnetzwerkelement (101), wobei das Verfahren die folgenden Schritte umfasst, ausgeführt von dem ersten Kommunikationsnetzwerkelement (105):
- Empfangen (301) von mindestens zwei uncodierten Signalisierungsnachrichten;
- Codieren (303) der mindestens zwei uncodierten Signalisierungsnachrichten, um mindestens zwei kodierte Signalisierungsnachrichten zu erhalten;
- Teilen (307) der kodierten Signalisierungsnachrichten in Bursts durch Verschachtelung von Daten von mehr als einer der kodierten Signalisierungsnachrichten;
- Verschlüsseln der Bursts; und
- Übertragen (315) der verschlüsselten Bursts an das zweite Kommunikationsnetzwerkelement (101),
wobei das Verfahren **dadurch gekennzeichnet ist, dass** zumindest einige Bursts Daten von einer vorhersehbaren Signalisierungsnachricht und einer unvorhersehbaren Signalisierungsnachricht enthalten.

2. Verfahren nach Anspruch 1, wobei der Inhalt der vorhersehbaren Signalisierungsnachricht von einem Netzwerkbeobachter bestimmt oder erkannt werden kann und der Inhalt von einer unvorhersehbaren Signalisierungsnachricht nicht von einem Netzwerkbeobachter bestimmt oder erkannt werden kann.

3. Verfahren nach einem der vorhergehenden Ansprüche, wobei die Signalisierungsinformation Information der Funkressourcenkontrolle (RRC) ist.

4. Verfahren nach einem der vorhergehenden Ansprüche, wobei ferner das Verfahren Ändern (305) eines voreingestellten Verschachtelungsschemas in ein anderes Verschachtelungsschema umfasst.

5. Verfahren nach Anspruch 4, wobei das voreingestellte Schema dem Verschachtelungsschema eines unabhängigen zugeordneten Steuerkanals oder eines langsamen assoziierten Steuerkanals entspricht und das andere Verschachtelungsschema dem Verschachtelungsschema eines schnellen assoziierten Vollratensteuerkanals entspricht.

6. Verfahren nach einem der vorhergehenden Ansprüche, wobei die Länge der uncodierten Nachricht 184 Bits ist und die Länge der codierten Nachricht 456 Bits ist.

7. Verfahren nach einem der vorhergehenden Ansprüche, wobei die Verschachtelung so ausgeführt ist, dass sich die Daten von einer spezifisch codierten Nachricht über acht aufeinanderfolgende Bursts erstrecken.

8. Verfahren nach Anspruch 7, wobei die Verschachtelung so ausgeführt ist, dass jeder der ersten vier Bursts 57 Bits einer vorherigen codierten Nachricht (n-1) und 57 Bits der gegenwärtigen codierten Nachricht (n) enthält und jeder der letzten vier Bursts 57 Bits der gegenwärtigen Nachricht (n) und 57 Bits der nächsten codierten Nachricht (n+1) enthält.

9. Verfahren nach Anspruch 8, wobei die Verschachtelung so ausgeführt ist, dass die gegenwärtige Nachricht (n) eine unvorhersehbare Nachricht ist und Nachrichten (n-1) und (n+1) vorhersehbare Nachrichten sind oder die gegenwärtige Nachricht (n) eine vorhersehbare Nachricht ist und Nachrichten (n-1) und (n+1) unvorhersehbare Nachrichten sind.

10. Verfahren nach einem der vorhergehenden Ansprüche, wobei dann wenn das erste Kommunikationsnetzwerkelement (105) eine Basisstationssteuereinheit (105) eines Funkkommunikationsnetzwerks ist, ist das zweite Kommunikationsnetzwerkelement (101) ein Mobiltelefon (101), und wenn das erste Kommunikationsnetzwerkelement (105) ein Mobiltelefon (101) eines Funkkommunikationsnetzwerks ist, ist das zweite Kommunikationsnetzwerkelement (101) eine Basisstationssteuereinheit (105) eines Funkkommunikationsnetzwerks.

11. Verfahren nach einem der vorhergehenden Ansprüche, wobei alle Bursts Daten von einer vorhersehbaren Signalisierungsnachricht und einer nichtvorhersehbaren Signalisierungsnachricht enthalten.

12. Verfahren nach einem der vorhergehenden Ansprüche, wobei das Kommunikationsnetzwerk eingerichtet ist, um basierend auf dem globalen System für mobile Kommunikationsnetzwerkstandards zu operieren.

13. Ein Computerprogrammprodukt, welches Anweisungen für die Implementierung der Verfahrensschritte nach einem der vorhergehenden Ansprüche umfasst, wenn es auf Computermitteln des ersten Netzwerkelements (101; 105) geladen ist und läuft.

14. Ein Kommunikationsnetzwerkelement (105) zum Übertragen von Signalisierungsinformation an ein anderes Kommunikationsnetzwerkelement (101) in einem Kommunikationsnetzwerk, wobei das Kommunikationsnetzwerkelement umfasst:
- Mittel, um mindestens zwei uncodierte Signalisierungsnachrichten zu empfangen;
- Mittel, um mindestens zwei uncodierte Signalisierungsnachrichten zu verschlüsseln, um mindestens zwei codierte Signalisierungsnachrichten zu erhalten;
- Mittel, um die codierten Signalisierungsnachrichten in Bursts durch Verschachtelung von Daten von mehr als einer codierten Signalisierungsnachricht aufzuteilen;
- Mittel, um die Bursts zu verschlüsseln; und
- Mittel, um die verschlüsselten Bursts von dem Kommunikationsnetzwerkelement (105) an das andere Kommunikationsnetzwerkelement (101) zu übertragen,
wobei das Kommunikationselement (105) **dadurch gekennzeichnet ist, dass** mindestens einige Bursts Daten von einer vorhersehbaren Signalisierungsnachricht und einer unvorhersehbaren Signalisierungsnachricht enthalten.

15. Kommunikationsnetzwerkelement nach Anspruch 14, wobei das Kommunikationsnetzwerkelement (105) eine Basisstationssteuereinheit (105) eines Funkkommunikationsnetzwerks ist und das andere Kommunikationsnetzwerkelement (101) ein Mobiltelefon (101) ist, und wenn das Kommunikationsnetzwerkelement (105) ein Mobiltelefon (101) eines Funkkommunikationsnetzwerks ist, ist das andere Kommunikationsnetzwerkelement (101) eine Basisstationssteuereinheit (105) eines Funkkommunikationsnetzwerks.

## Revendications

1. Méthode de transmission d'une information de signalisation entre un premier élément de réseau de communication (105) et un deuxième élément de réseau de communication (101) dans un réseau de communication, la méthode comprenant les étapes suivantes effectuées par le premier élément de réseau de communication (105):
- l'obtention (301) d'au moins deux messages de signalisation non codés;
- le cryptage (303) des au moins deux messages de signalisation non codés;
- la division (307) de messages de signalisation codés par salves en intercalant des données de plus d'un message de signalisation encodé;
- le cryptage des salves; et
- la transmission (315) des fragments cryptés au deuxième élément de réseau de communication (101),
la méthode étant **caractérisée en ce qu'**au moins certaines salves contiennent des données d'un message de signalisation prévisible et un message de signalisation non prévisible.

2. Méthode selon la revendication 1, dans laquelle le contenu du message de signalisation prévisible peut être déterminé ou reconnu par un observateur de réseau et le contenu d'un message de signalisation non prévisible ne peut pas être déterminé ou reconnu par un observateur de réseau.

3. Méthode selon l'une des revendications précédentes, dans laquelle l'information de signalisation est une information de contrôle de ressource radio.

4. Méthode selon l'une des revendications précédentes, dans laquelle la méthode comprend en outre le changement (305) d'un schéma d'entrelacement par défaut à un autre schéma d'entrelacement.

5. Méthode selon la revendication 4, dans laquelle le schéma par défaut correspond au schéma d'entrelacement d'un canal de contrôle spécialisé autonome ou d'un canal de contrôle associé lent et l'autre schéma d'entrelacement correspond au schéma d'entrelacement d'un canal de contrôle associé rapide à taux plein.

6. Méthode selon l'une des revendications précédentes, dans laquelle la longueur du message non codé est de 184 bits et la longueur du message non codé est de 456 bits.

7. Méthode selon l'une des revendications précédentes, dans laquelle l'entrelacement est fait de telle manière que les données d'un message codé spécifique sont réparties en huit salves consécutifs.

8. Méthode selon la revendication 7, dans laquelle l'entrelacement est fait de manière à ce que chacune des quatre premières salves contient 57 bits d'un message codé précédent (n-1) et 57 bits d'un message codé courant (n), et chacune des quatre dernières fragments contient 57 bits du message courant (n) et 57 bits du message codé suivant (n+1).

9. Méthode selon la revendication 8, dans laquelle l'entrelacement est fait de sorte que le message courant (n) est un message imprévisible et les messages (n-1) et (n+1) sont des messages prévisibles, ou le message courant (n) est un message prévisible et les messages (n-1) et (n+1) sont des messages imprévisibles.

10. Méthode selon l'une des revendications précédentes, dans laquelle lorsque le premier élément de réseau de communication (105) est un contrôleur de station de base (105) d'un réseau de communication radio, le deuxième élément de réseau de communication (101) est un téléphone mobile (101), et lorsque le premier élément de réseau de communication (105) est un téléphone mobile (101) d'un réseau de communication radio, le deuxième élément de réseau de communication (101) est un contrôleur de station de base (105) d'un réseau de communication radio.

11. Méthode selon l'une des revendications précédentes, dans laquelle toutes les salves contiennent des données d'un message de signalisation prévisible et un message de signalisation imprévisible.

12. Méthode selon l'une des revendications précédentes, dans laquelle le réseau de communication est agencé pour fonctionner sur la base du standard GSM (système global pour réseau de communication mobile).

13. Programme informatique comprenant des instructions pour la mise en oeuvre des étapes d'une méthode selon l'une des revendications précédentes, lorsque celui-ci est chargé et exécuté sur un ordinateur du premier élément de réseau (101 ; 105).

14. Elément d'un réseau de communication (105) pour transmettre une information de signalisation à un autre élément de réseau de communication (101) dans un réseau de communication, l'élément de réseau de communication comprenant:
- des moyens pour obtenir au moins deux messages de signalisation non codés;
- des moyens pour encoder les au moins deux messages de signalisation codés afin d'obtenir au moins deux messages de signalisation codés;
- des moyens pour diviser les messages de signalisation codés par salves en intercalant des données de plus d'un message de signalisation codé;
- des moyens pour encrypter les salves; et
- des moyens pour transmettre les salves encryptées de l'élément de réseau de communication (105) à l'autre élément de réseau de communication (101),
l'élément de communication (105) étant **caractérisé en ce qu'**au moins certaines salves contiennent des données d'un message de signalisation prévisible et un message de signalisation imprévisible.

15. Elément de réseau de communication selon la revendication 14, dans lequel lorsque l'élément du réseau de communication (105) est un contrôleur de station de base (105) d'un réseau de communication radio et l'autre élément du réseau de communication (101) est un téléphone mobile (101), et lorsque l'élément du réseau de communication (105) est un téléphone mobile (101) d'un réseau de communication radio, l'autre élément du réseau de communication (101) est un contrôleur de station de base (105) d'un réseau de communication radio.
